# EUROPEAN PATENT SPECIFICATION

(11) **EP 2 295 735 B1**
(45) Date of publication and mention of the grant of the patent: **23.03.2016**
(21) Application number: 10172431.8
(22) Date of filing: 10.08.2010
(51) Int. Cl.: F01K 23/10, F01K 13/02

(54) **Control method and device for controlling a combined-cycle power plant, and combined-cycle power plant**
Kontrollverfahren und Apparat zur Kontrolle eines Kombikraftwerks, und Kombikraftwerk
Procédé de commande et l'apparail de contrôle d'une centrale à cycle combiné, et centrale à cycle combiné

(30) Priority: 10.08.2009 IT MI20091459
(43) Date of publication of application: 16.03.2011
(73) Proprietor: Ansaldo Energia S.p.A., Genova (IT)
(72) Inventor: Gruppi, Pietro, 16146 Genova (IT); Repetto, Enrico, 16149 Genova (IT)
(74) Representative: Bergadano, Mirko

(56) References cited:
- EP-A1- 1 914 394
- WO-A2-2006/097495
- ACKENHEIL R ET AL: "PRIMARY FREQUENCY CONTROL FOR COMBINED CYCLE POWER PLANTS", VGB POWERTECH, VGB POWERTECH, ESSEN, DE, vol. 86, no. 3, 1 January 2006 (2006-01-01), pages 76-78, XP001241930, ISSN: 1435-3199
- ANONYMOUS: 'Measurement Of Net Versus Gross Power Generation For The Allocation Of NOx Emission Allowances', [Online] 27 January 1999, XP055107358 Retrieved from the Internet: <URL:http://www.epa.gov/airmarkets/progsreg s/nox/docs/netvgrow.pdf> [retrieved on 2014-03-12]

## Description

The present invention relates to a control method and a control device for controlling a combined-cycle power plant, and to a combined-cycle power plant.

Generally, a combined-cycle power plant comprises a gas-turbine assembly, a first electric generator, connected to the gas-turbine assembly, a steam-turbine assembly, connected to the gas-turbine assembly so as to be supplied by exhaust gases of the gas-turbine assembly, and a second electric generator, connected to the steam-turbine assembly.

In addition, the combined-cycle power plant comprises an electric-transformer assembly and electric lines that connect the electric-transformer assembly to the first electric generator and to the second electric generator, on one side, and to a power grid, on the other.

In addition, the combined-cycle power plant comprises auxiliary devices, which are necessary for operation of the plant itself and are supplied by the electric power supplied by the first electric generator or by the second electric generator.

A combined-cycle power plant is disclosed in document EP 1914349 A1. The said document discloses a method for controlling a combined-cycle plant and account for transit load changes by changing steam entrance valve position or gas turbine. As in any power grid the supply and the demand of electric power has to be balanced. An imbalance between supply and demand will result in changes of AC net frequency which is a control variable for the plant. So the plant senses the AC net frequency and control the steam entrance valve position or gas turbine based upon the AC net frequency.

The combined-cycle power plant comprises a control device, which acts on the gas-turbine assembly in such a way that the effective electric power yielded to the power grid is equal to the required electric power.

Furthermore, the control device controls the electric-transformer assembly in such a way that the output voltage of the combined-cycle power plant is equal to the voltage of the power grid.

The control device performs also a direct control of the operating conditions of the gas turbine. In practice, the control device intervenes directly through members for regulating the gas-turbine assembly, which normally comprise fuel-supply valves and an array of inlet guide vanes (IGVs), for controlling, for example, the power delivered and the rate of rotation.

The steam-turbine assembly, instead, is in general controlled indirectly by the control device, at least in normal operating conditions. In other words, the power supplied by the steam-turbine assembly is basically determined by the flow rate of the exhaust gases of the gas-turbine assembly and hence by the power delivered thereby. The control of the gas-turbine assembly hence affects indirectly also the power generated by the steam-turbine assembly.

In use, the control device generates a net-electric-power reference indicating the electric power that the combined-cycle power plant must supply to the power grid.

The control device detects the gross electric power of the second electric generator (i.e., the electric power supplied by the second electric generator and detected at output therefrom) and estimates the losses along the electric lines and on the transformer, and the power absorbed by the auxiliary devices. Then, the control device determines, on the basis of the estimates made, a gross-electric-power reference for the gas-turbine assembly in such a way that the electric power delivered to the power grid coincides with the net-electric-power reference.

The gross-electric-power reference hence indicates a surplus of power that the gas-turbine assembly must supply in addition to the required power in order to compensate for the losses along the lines and the absorption by the auxiliary devices.

A technical problem present in combined-cycle power plants is that the losses along the electric lines and on the transformer and the power absorbed by the auxiliary devices cannot be estimated precisely. In addition to the intrinsic estimation uncertainty, the losses and the levels of absorption depend, in fact, upon the electric power generated by the combined-cycle power plant.

The estimation error determines a deviation between the electric power delivered to the power grid and the net-electric-power reference.

In the known art, this deviation is made up for with buffer systems, which, however, are complex, and do not present sufficiently high levels of performance as required by the dictates of the energy market.

One aim of the present invention is hence to provide a method for controlling a combined-cycle power plant that will limit the drawbacks of the known art.

According to the present invention, a method for controlling a combined-cycle power plant is provided, the combined-cycle power plant comprising an electric generator, connected to a gas-turbine assembly and to a power grid through an electric-transformer assembly for delivering electric power to the power grid; the method comprising the steps of detecting a net electric power, delivered to the power grid, downstream of the electric-transformer assembly, and controlling the gas-turbine assembly on the basis of a net-electric-power reference, indicating the electric power to be delivered to the power grid, and on the basis of the net electric power; wherein the step of controlling the gas-turbine assembly comprises generating a gross-electric-power reference and controlling the gas-turbine assembly on the basis of the gross-electric-power reference, and wherein the step of generating the gross-electric-power reference comprises the substep of computing a net-electric-power error on the basis of the difference between the net-electric-power reference and the net electric power; wherein the step of generating the gross-electric-power reference comprises the substep of adding the gross electric power generated by the electric generator to the net-electric-power error.

One aim of the present invention is to provide a control device for controlling a combined-cycle power plant that will limit the drawbacks of the known art.

According to the present invention, a control device for controlling a combined-cycle power plant is provided, the combined-cycle power plant comprising an electric generator, connected to a gas-turbine assembly and to a power grid through an electric-transformer assembly for delivering electric power to the power grid; the control device comprising a first transducer, designed to be set downstream of the electric-transformer assembly for detecting a net electric power delivered to the power grid; the control device being configured for generating a net-electric-power reference, indicating the electric power to be delivered to the power grid; for controlling the gas-turbine assembly on the basis of the net-electric-power reference and of the net electric power; for generating the gross-electric-power reference on the basis of a net-electric-power error computed as the difference between the net-electric-power reference and the net electric power; and for generating the gross-electric-power reference on the basis of the sum of the net-electric-power error and of the gross electric power.

One aim of the present invention is then to provide a combined-cycle power plant that will limit the drawbacks of the known art.

According to the present invention, a combined-cycle power plant is provided, which comprises a gas-turbine assembly, a first electric generator, connected to the gas-turbine assembly, and an electric-transformer assembly, connected to the first electric generator and to a power grid for delivering electric power to the power grid; the combined-cycle power plant being characterized in that comprising a control device, which has a first transducer, set downstream of the electric-transformer assembly for detecting a net electric power delivered to the power grid, and is configured for generating a net-electric-power reference, indicating the electric power to be delivered to the power grid, and for controlling the gas-turbine assembly on the basis of the net-electric-power reference and of the net electric power; wherein the control device is configured for generating the gross-electric-power reference on the basis of a net-electric-power error computed as the difference between the net-electric-power reference and the net electric power; and wherein the control device is configured for generating the gross-electric-power reference on the basis of the sum of the net-electric-power error and of the gross electric power.

The present invention will now be described with reference to the annexed drawings, which illustrate a non-limiting example of embodiment thereof and in which:
- Figure 1 is a simplified block diagram of a combined-cycle power plant provided according to the present invention; and
- Figure 2 is a more detailed block diagram of a part of the combined-cycle power plant of Figure 1..

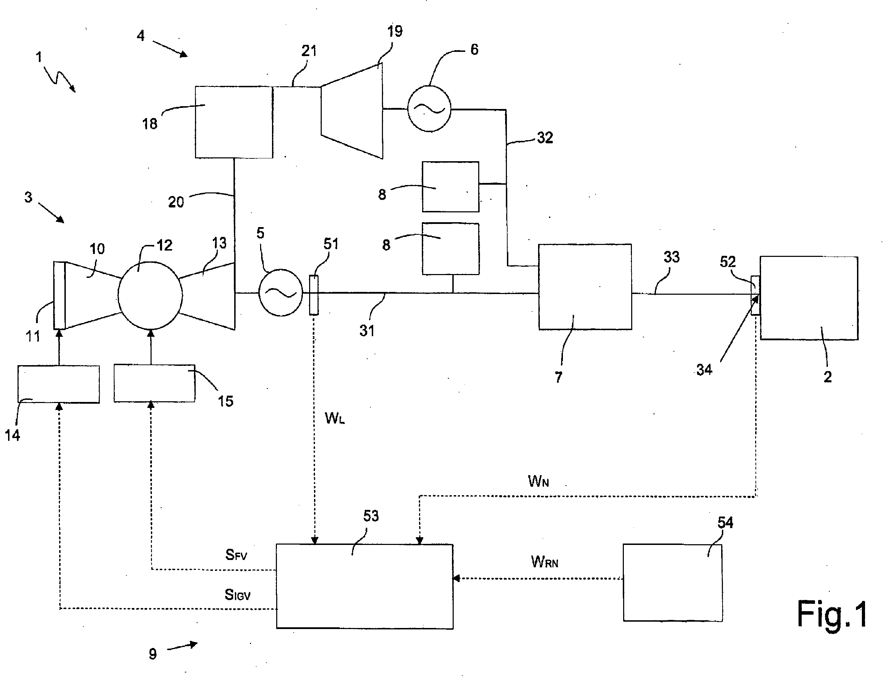

With reference to Figure 1, designated by 1 is a combined-cycle power plant for the production of electric power.

The combined-cycle power plant 1 can be selectively connected to a power grid 2 and comprises a gas-turbine assembly 3, a steam-turbine assembly 4, electric generators 5, 6, which are connected to the gas-turbine assembly 3 and to the steam-turbine assembly 4, respectively, for producing electric power, an electric-transformer assembly 7, auxiliary devices 8, and a control device 9. Alternatively, the combined-cycle power plant 1 can comprise a gas-turbine assembly, a steam-turbine assembly, and an electric generator on one and the same shaft.

The gas-turbine assembly 3 comprises a compressor 10, provided with a variable-geometry inlet stage or inlet-guide-vane (IGV) stage 11, a combustion chamber 12, a gas turbine 13, an actuator 14, connected to the IGV stage 11, and an actuator 15, connected to the combustion chamber 12. In particular, the input stage 11 of the compressor 10 is provided with a plurality of vanes (not shown), the inclination of which can be modified by means of the actuator 14 for adjusting the flow rate of air drawn in by the compressor 10 itself. The combustion chamber 12 receives the fuel through a set of supply valves (not illustrated) operated by the actuator 15.

The steam-turbine assembly 4 comprises a steam generator 18, a steam turbine 19, a duct 20 for connecting the steam generator 18 to the gas turbine 13, and ducts 21 for connecting the steam generator 18 to the steam turbine 19.

The exhaust gases of the gas turbine 13 are channelled along the duct 20 and provide a source of heat for the steam generator 18.

The steam turbine 19 is supplied by the steam generator 18 via the ducts 21. The steam turbine 19 is divided into a plurality of sections, for example a low-pressure section, a medium-pressure section, and a high-pressure section (which are not illustrated).

As has already been said, the combined-cycle power plant 1 comprises the auxiliary devices 8, which are necessary for operation of the combined-cycle power plant 1 itself and are supplied by the electric power supplied by the electric generators 5, 6. The auxiliary devices 8 can be, for example, pumps, further actuators, cooling or heating circuits, lighting circuits, control circuits, regulators. The auxiliary devices 8 are represented schematically in Figure 1 and are set by way of example downstream of the electric generators 5 and 6. It remains understood that the auxiliary devices 8 comprise any device that is supplied with the energy produced by the combined-cycle power plant 1 and that is set in any point of the combined-cycle power plant 1.

The combined-cycle power plant 1 comprises an electric line 31, which connects the electric generator 5 to the electric-transformer assembly 7, and an electric line 32, which connects the electric generator 6 to the electric-transformer assembly 7. The electric-transformer assembly 7 comprises one or more electric transformers for adapting the output voltage of the electric generators 5 and 6 to the voltage of the power grid 2.

In addition the combined-cycle power plant 1 comprises an electric line 33, which connects the electric-transformer assembly 7 to the power grid 2. The electric line 33 hence conveys the electric power produced by the combined-cycle power plant 1 from the electric-transformer assembly 7 to a point of delivery 34 to the power grid 2. The point of delivery 34 is the point in which the combined-cycle power plant 1 yields the electric power to the power grid 2.

The control device 9 comprises a transducer 51, connected to the electric line 31 and set at output from the electric generator 5, a transducer 52, set downstream of the electric-transformer assembly 7, and a processing module 53.

The transducer 51 detects a gross electric power W_{L}, indicating the instantaneous electric power produced by the electric generator 5 connected to the gas-turbine assembly 3.

The transducer 52 is set downstream of the electric-transformer assembly 7 and detects a net electric power W_{N}, indicating the instantaneous electric power produced by the combined-cycle power plant 1 and actually yielded to the power grid 2. The transducer 52 is connected to the electric line 33, preferably in the point of delivery 34 to the power grid 2. In this way, in fact, if the transformer assembly 7 and the point of delivery 34 to the power grid 2 are far apart (the electric line 33 can in fact extend for several kilometres), the transducer 52 detects the net electric power W_{N} actually yielded to the power grid 2, and the measurement is not affected by an error deriving from the electric power dissipated by the Joule effect along the electric line 33.

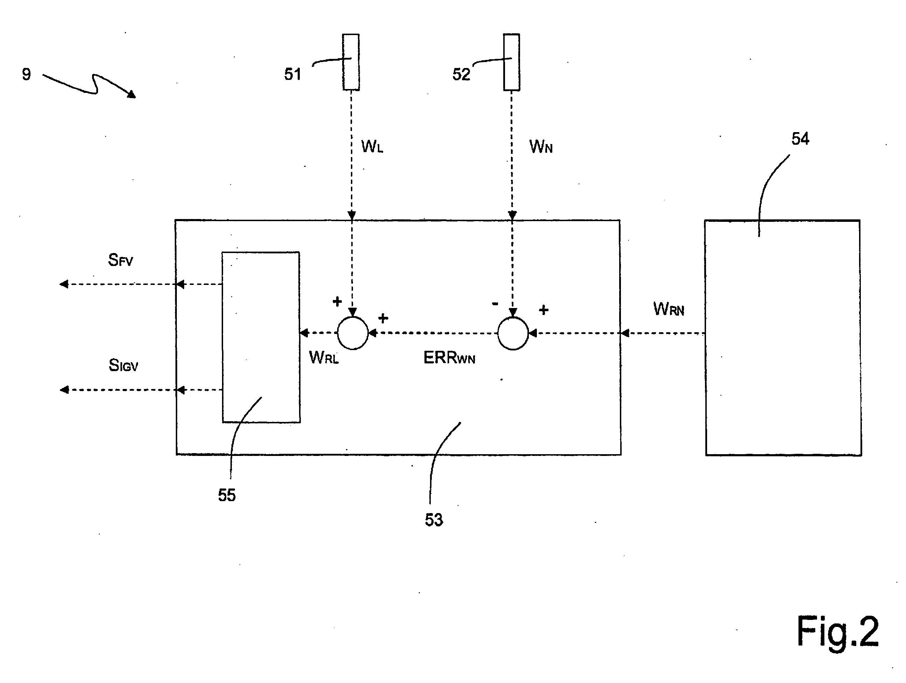

With reference to Figure 2, the control device 9 comprises a reference-generator module 54, which supplies a net-electric-power reference W_{RN} indicating the instantaneous electric power to be delivered to the power grid 2. With reference to the attached figures, the reference-generator module 54 determines the net-electric-power reference W_{RN} on the basis of multiple parameters, amongst which: the time curve of demand for generation of electric power, operating parameters of the combined-cycle power plant 1, such as, for example, environmental parameters, values of maximum and minimum power that can be generated by the combined-cycle power plant 1, maximum gradient of variation of the power that can be generated by the combined-cycle power plant 1, degree to which the combined-cycle power plant 1 is involved in the adjustment of frequency. The time curve of demand for generation of electric power is supplied to the control device 9 per unit time (usually a unit of time is fifteen minutes).

The control module 53 determines a net-electric-power error ERR_{WN} on the basis of the difference between the net-electric-power reference W_{RN} and the net electric power W_{N} detected. The net-electric-power error ERR_{Wn} is added to the gross electric power W_{L} detected for computing the gross-electric-power reference W_{RL} to be supplied to the gas-turbine assembly 3.

The processing module 53 comprises a control block 55 for controlling the actuators 14 and 15. The gross-electric-power reference W_{RL} is supplied to the control block 55, which determines control signals S_{FV} and S_{IGV} that are supplied, respectively, to the actuator 15 and to the actuator 14 of the gas-turbine assembly 3. The control signals S_{FV} and S_{IGV} are determined on the basis of the gross-electric-power reference W_{RL} in such a way that the gross electric power W_{L} generated by the electric generator 5 connected to the gas-turbine assembly 3 is equal to the gross-electric-power reference W_{RL} supplied.

In this way, the precision of the control of the net electric power W_{N} delivered by the combined-cycle power plant 1 to the power grid 2 is improved. In fact, given that the net electric power W_{N} is measured in the point of delivery 34, the gross-electric-power reference W_{RL} for the gas-turbine assembly 3 is computed without any need for detecting the electric power generated by the electric generator 6 connected to the steam-turbine assembly 4 and without the need for estimating the power absorbed by the auxiliary devices 8 and the losses due to the Joule effect on the electric lines 31, 32, 33 and on the transformer 7. An important source of uncertainty is thus eliminated and, as compared to the known art, the control loop for controlling the net electric power W_{N} delivered to the power grid 2 is closed on the effective measurement of the net electric power W_{N}.

According to a variant of the present invention (not illustrated in the attached figures), the combined-cycle power plant comprises two gas-turbine assemblies and one steam-turbine assembly, comprising two steam generators connected to respective gas-turbine assemblies for supplying the steam-turbine assembly. In this case, the two gas-turbine assemblies and the steam-turbine assembly are each connected to a respective electric generator. In this case, the control device comprises a transducer connected to each electric generator, in turn connected to one of the gas-turbine assemblies for detecting the gross electric power generated by said electric generators.

Finally, it is evident that modifications and variations may be made to the device and to the method described, without thereby departing from the scope of the present invention, as defined in the annexed claims.

## Claims

1. A method for controlling a combined-cycle power plant, the combined-cycle power plant (1) comprising an electric generator (5), connected to a gas-turbine assembly (3) and to a power grid (2) through an electric-transformer assembly (7) for delivering electric power to the power grid (2); the method comprising the steps of detecting a net electric power (W_{N}), delivered to the power grid (2), downstream of the electric-transformer assembly (7), and controlling the gas-turbine assembly (3) on the basis of a net-electric-power reference (W_{RN}), indicating the electric power to be delivered to the power grid (2), and on the basis of the net electric power (W_{N}); wherein the step of controlling the gas-turbine assembly (3) comprises generating a gross-electric-power reference (W_{RL}) and controlling the gas-turbine assembly (3) on the basis of the gross-electric-power reference (W_{RL}), and wherein the step of generating the gross-electric-power reference (W_{RL}) comprises the substep of computing a net-electric-power error (ERR_{WN}) on the basis of the difference between the net-electric-power reference (W_{RN}) and the net electric power (W_{N}); wherein the step of generating the gross-electric-power reference (W_{RL}) comprises the substep of adding the gross electric power (W_{L}) generated by the electric generator (5) to the net-electric-power error (ERR_{WN}).

2. The method according to Claim 1, comprising the step of controlling the gas-turbine assembly (3) on the basis of a gross electric power (W_{L}) generated by the electric generator (5).

3. The method according to Claim 1 or Claim 2, wherein the net electric power (W_{N}) detected downstream of the electric-transformer assembly (7) is detected in a point of delivery (34) to the power grid (2).

4. A control device for controlling a combine-cycle power plant, the combined-cycle power plant (1) comprising an electric generator (5), connected to a gas-turbine assembly (3) and to a power grid (2) through an electric-transformer assembly (7) for delivering electric power to the power grid (2); the control device (9) comprising a first transducer (52), designed to be set downstream of the electric-transformer assembly (7) for detecting a net electric power (W_{N}) delivered to the power grid (2); the control device (9) being configured for generating a net-electric-power reference (W_{RN}), indicating the electric power to be delivered to the power grid (2); for controlling the gas-turbine assembly (3) on the basis of the net-electric-power reference (W_{RN}) and of the net electric power (W_{N}); for generating the gross-electric-power reference (W_{RL}) on the basis of a net-electric-power error (ERR_{WN}) computed as the difference between the net-electric-power reference (W_{RN}) and the net electric power (W_{N}); and for generating the gross-electric-power reference (W_{RL}) on the basis of the sum of the net-electric-power error (ERR_{WN}) and of the gross electric power (W_{L}).

5. The control device according to Claim 4, comprising a second transducer (51), designed to be set downstream of the electric generator (5) and upstream of the electric-transformer assembly (7) for detecting a gross electric power (W_{L}) generated by the electric generator (5); the control device (9) being configured for controlling the gas-turbine assembly (3) on the basis of the gross electric power (W_{L}).

6. The control device according to Claim 4 or Claim 5, wherein the first transducer (52) is designed to be set in a point of delivery (34) to the power grid (2').

7. A combined-cycle power plant, comprising a gas-turbine assembly (3), a first electric generator (5), connected to the gas-turbine assembly (3), and an electric-transformer assembly (7), connected to the first electric generator (5) and to a power grid (2) for delivering electric power to the power grid (2); the combined-cycle power plant (1) being **characterized in that** comprising a control device (9), which has a first transducer (52), set downstream of the electric-transformer assembly (7) for detecting a net electric power (W_{N}) delivered to the power grid (2), and is configured for generating a net-electric-power reference (W_{RN}), indicating the electric power to be delivered to the power grid (2), and for controlling the gas-turbine assembly (3) on the basis of the net-electric-power reference (W_{RN}) and of the net electric power (W_{N}); wherein the control device (9) is configured for generating the gross-electric-power reference (W_{RL}) on the basis of a net-electric-power error (ERR_{WN}) computed as the difference between the net-electric-power reference (W_{RN}) and the net electric power (W_{N}); and wherein the control device (9) is configured for generating the gross-electric-power reference (W_{RL}) on the basis of the sum of the net-electric-power error (ERR_{WN}) and of the gross electric power (W_{L}).

8. The plant according to Claim 7, wherein the control device (9) comprises a second transducer (51), set downstream of the electric generator (5) and upstream of the electric-transformer assembly (7), for detecting a gross electric power (W_{L}) generated by the first electric generator (5); the control device (9) being configured for controlling the gas-turbine assembly (3) on the basis of the gross electric power (W_{L}).

9. The plant according to Claim 7 or Claim 8, wherein the first transducer (52) is set in a point of delivery (34) to the power grid (2).

10. The plant according to any one of Claims 7 to 9, comprising a steam-turbine assembly (4) connected to the gas-turbine assembly (3), a second electric generator (6), connected to the steam-turbine assembly (4) for generating electric power and to the electric-transformer assembly (7) for delivering the electric power to the power grid (2).

## Patentansprüche

1. Verfahren zum Steuern eines Kombikraftwerks, wobei das Kombikraftwerk (1) einen elektrischen Generator (5) umfasst, der mit einer Gasturbinenanordnung (3) und durch eine elektrische Transformatoranordnung (7) mit einem Energieversorgungsnetz (2) verbunden ist, um das Energieversorgungsnetz (2) mit elektrischer Leistung zu versorgen; wobei das Verfahren den Schritt des Detektierens einer elektrischen Nettoleistung (W_{N}), mit der das Energieversorgungsnetz (2) versorgt wird, hinter der elektrischen Transformatoranordnung (7), und den Schritt des Steuerns der Gasturbinenanordnung (3) basierend auf einem elektrischen Nettoleistungsreferenzwert (W_{RN}), der die elektrische Leistung anzeigt, mit der das Energieversorgungsnetz (2) versorgt werden soll, und basierend auf der elektrischen Nettoleistung (W_{N}), umfasst; wobei der Schritt des Steuerns der Gasturbinenanordnung (3) das Erzeugen eines elektrischen Bruttoleistungsreferenzwertes (W_{RL}) und das Steuern der Gasturbinenanordnung (3) basierend auf dem elektrischen Bruttoleistungsreferenzwert (W_{RL}) umfasst, und wobei der Schritt des Erzeugens des elektrischen Bruttoleistungsreferenzwertes (W_{RL}) den Unterschritt des Berechnens eines elektrischen Nettoleistungsfehlers (ERR_{WM}) basierend auf der Differenz zwischen dem elektrischen Nettoleistungsreferenzwert (W_{RN}) und der elektrischen Nettoleistung (W_{N}) umfasst; wobei der Schritt des Erzeugens des elektrischen Bruttoleistungsreferenzwertes (W_{RL}) den Unterschritt des Addierens der elektrischen Bruttoleistung (W_{L}), die von dem elektrischen Generator erzeugt wird, zu dem elektrischen Nettoleistungsfehler (ERR_{WN}) umfasst.

2. Verfahren nach Anspruch 1, das den Schritt des Steuerns der Gasturbinenanordnung (3) basierend auf einer elektrischen Bruttoleistung (W_{L}) umfasst, die von dem elektrischen Generator (5) erzeugt wird.

3. Verfahren nach Anspruch 1 oder Anspruch 2, wobei die elektrische Nettoleistung (W_{N}), die hinter der elektrischen Transformatoranordnung (7) detektiert wird, an einem Versorgungspunkt (35) des Energieversorgungsnetzes (2) detektiert wird.

4. Steuervorrichtung zum Steuern eines Kombikraftwerks, wobei das Kombikraftwerk (1) einen elektrischen Generator (5) umfasst, der mit einer Gasturbinenanordnung (3) und durch eine elektrische Transformatoranordnung (7) mit einem Energieversorgungsnetz (2) verbunden ist, um das Energieversorgungsnetz (2) mit elektrischer Leistung zu versorgen; wobei die Steuervorrichtung (9) einen ersten Umsetzer (52) umfasst, der entworfen ist, um hinter der elektrischen Transformatoranordnung (7) positioniert zu werden, um eine elektrische Nettoleistung (W_{N}), mit der das Energieversorgungsnetz (2) versorgt wird, zu detektieren; wobei die Steuervorrichtung (9) konfiguriert ist, einen elektrischen Nettoleistungsreferenzwert (W_{RN}) zu erzeugen, der die elektrische Leistung anzeigt, mit der das Energieversorgungsnetz versorgt werden soll; die Gasturbinenanordnung (3) basierend auf dem elektrischen Nettoleistungsreferenzwert (W_{RN}) und der elektrische Nettoleistung (W_{N}) zu steuern; den elektrischen Bruttoleistungsreferenzwert (W_{RL}) basierend auf einem elektrischen Nettoleistungsfehler (ERR_{WN}) zu erzeugen, der als Differenz zwischen dem elektrischen Nettoleistungsreferenzwert (W_{RN}) und der elektrischen Nettoleistung (W_{N}) berechnet wird; und den elektrischen Bruttoleistungsreferenzwert (W_{RL}) basierend auf der Summe des elektrischen Nettoleistungsfehlers (ERR_{WN}) und der elektrischen Bruttoleistung (W_{L}) zu erzeugen.

5. Steuervorrichtung nach Anspruch 4, die einen zweiten Umsetzer (51) umfasst, der entworfen ist, um hinter dem elektrischen Generator (5) und vor der elektrischen Transformatoranordnung (7) positioniert zu werden, um eine elektrische Bruttoleistung (W_{L}), die von dem elektrischen Generator (5) erzeugt wird, zu detektieren; wobei die Steuervorrichtung (9) konfiguriert ist, die Gasturbinenanordnung (3) basierend auf der elektrischen Bruttoleistung (W_{L}) zu steuern.

6. Steuervorrichtung nach Anspruch 4 oder Anspruch 5, wobei der erste Umsetzer (52) entworfen ist, um in einem Versorgungspunkt (34) des Energieversorgungsnetzes (2) positioniert zu werden.

7. Kombikraftwerk, das eine Gasturbinenanordnung (3), einen ersten elektrischen Generator (5), der mit der Gasturbinenanordnung (3) verbunden ist, und eine elektrische Transformatoranordnung (7), die mit dem ersten elektrischen Generator (5) und einem Energieversorgungsnetz (2) verbunden ist, umfasst, um das Energieversorgungsnetz (2) mit elektrischer Leistung zu versorgen; wobei das Kombikraftwerk (1) **dadurch gekennzeichnet ist, dass** es eine Steuervorrichtung (9) umfasst, die einen ersten Umsetzer (52) umfasst, der hinter der elektrischen Transformatoranordnung (7) positioniert ist, um eine elektrische Nettoleistung (W_{N}), mit der das Energieversorgungsnetz (2) versorgt wird, zu detektieren, und die konfiguriert ist, einen elektrischen Nettoleistungsreferenzwert (W_{RN}) zu erzeugen, der die elektrische Leistung anzeigt, mit der das Energieversorgungsnetz (2) versorgt werden soll, und die Gasturbinenanordnung (3) basierend auf dem elektrischen Nettoleistungsreferenzwert (W_{RN}) und der elektrische Nettoleistung (W_{N}) zu steuern; wobei die Steuervorrichtung (9) konfiguriert ist, den elektrischen Bruttoleistungsreferenzwert (W_{RL}) basierend auf einem elektrischen Nettoleistungsfehler (ERR_{WN}) zu erzeugen, der als die Differenz zwischen dem elektrischen Nettoleistungsreferenzwert (W_{RN}) und der elektrischen Nettoleistung (W_{N}) berechnet wird; und wobei die Steuervorrichtung (9) konfiguriert ist, den elektrischen Bruttoleistungsreferenzwert (W_{RL}) basierend auf der Summe des elektrischen Nettoleistungsfehlers (ERR_{WN}) und der elektrischen Bruttoleistung (W_{L}) zu erzeugen.

8. Kraftwerk nach Anspruch 7, wobei die Steuervorrichtung (9) einen zweiten Umsetzer (51) umfasst, der hinter dem elektrischen Generator (5) und vor der elektrischen Transformatoranordnung (7) positioniert ist, um eine elektrische Bruttoleistung (W_{L}), die von dem elektrischen Generator (5) erzeugt wird, zu detektieren; wobei die Steuervorrichtung (9) konfiguriert ist, die Gasturbinenanordnung (3) basierend auf der elektrischen Bruttoleistung (W_{L}) zu steuern.

9. Kraftwerk nach Anspruch 7 oder Anspruch 8, wobei der erste Umsetzer (52) in einem Versorgungspunkt (34) des Energieversorgungsnetzes (2) positioniert ist.

10. Kraftwerk nach einem der Ansprüche 7 bis 9, das eine Dampfturbinenanordnung (4), die mit der Gasturbinenanordnung (3) verbunden ist, und einen zweiten elektrischen Generator (6) umfasst, der mit der Dampfturbinenanordnung (4) verbunden ist, um elektrische Leistung zu erzeugen, und der mit der elektrischen Transformatoranordnung (7) verbunden ist, um das Energieversorgungsnetz (2) mit elektrischer Leistung zu versorgen.

## Revendications

1. Procédé de commande d'une centrale électrique à cycle combiné, la centrale électrique à cycle combiné (1) comprenant un générateur électrique (5), raccordé à un ensemble formant turbine à gaz (3) et à un réseau électrique (2) par l'intermédiaire d'un ensemble formant transformateur électrique (7) pour livrer une énergie électrique au réseau électrique (2) ; le procédé comprenant les étapes de détection d'une énergie électrique nette (W_{N}), livrée au réseau électrique (2), en aval de l'ensemble formant transformateur électrique (7), et de commande de l'ensemble formant turbine à gaz (3) sur la base d'une référence d'énergie électrique nette (W_{RN}), indiquant l'énergie électrique devant être livrée au réseau électrique (2), et sur la base de l'énergie électrique nette (W_{N}) ; dans lequel l'étape de commande de l'ensemble formant turbine à gaz (3) comprend la création d'une référence d'énergie électrique brute (W_{RL}) et de commande de l'ensemble formant turbine à gaz (3) sur la base de la référence d'énergie électrique brute (W_{RL}), et dans lequel l'étape de création de la référence d'énergie électrique brute (W_{FL}) comprend l'étape secondaire de calcul d'une erreur d'énergie électrique nette (ERR_{WN}) sur la base de la différence entre la référence d'énergie électrique nette (W_{RN}) et l'énergie électrique nette (W_{N}) ; dans lequel l'étape de création de la référence d'énergie électrique brute (W_{RL}) comprend l'étape secondaire d'addition de l'énergie électrique brute (W_{L}) générée par le générateur électrique (5) à l'erreur d'énergie électrique nette (ERR_{WN}) .

2. Procédé selon la revendication 1, comprenant l'étape de commande de l'ensemble formant turbine à gaz (3) sur la base d'une énergie électrique brute (W_{L}) générée par le générateur électrique (5).

3. Procédé selon la revendication 1 ou 2, dans lequel l'énergie électrique nette (W_{N}) détectée en aval de l'ensemble formant transformateur électrique (7) est détectée en un point de livraison (34) au réseau électrique (2).

4. Dispositif de commande pour commander une centrale électrique à cycle combiné, la centrale électrique à cycle combiné (1) comprenant un générateur électrique (5), raccordé à un ensemble formant turbine à gaz (3) et à un réseau électrique (2) par l'intermédiaire d'un ensemble formant transformateur électrique (7) pour livrer une énergie électrique au réseau électrique (2) ; le dispositif de commande (9) comprenant un premier transducteur (52), conçu pour être placé en aval de l'ensemble formant transformateur électrique (7) pour détecter une énergie électrique nette (W_{N}) livrée au réseau électrique (2) ; le dispositif de commande (9) étant configuré pour créer une référence d'énergie électrique nette (W_{RN}), indiquant l'énergie électrique à livrer au réseau électrique (2) ; pour commander l'ensemble formant turbine à gaz (3) sur la base de la référence d'énergie électrique nette (W_{RN}) et de l'énergie électrique nette (W_{N}) ; pour créer la référence d'énergie électrique brute (W_{RL}) sur la base d'une erreur d'énergie électrique nette (ERR_{WN}) calculée comme étant la différence entre la référence d'énergie électrique nette (W_{RN}) et l'énergie électrique nette (W_{N}) ; et pour créer la référence d'énergie électrique brute (W_{RL}) sur la base de la somme de l'erreur d'énergie électrique nette (ERR_{WN}) et de l'énergie électrique brute (W_{L}).

5. Dispositif de commande selon la revendication 4, comprenant un deuxième transducteur (51), conçu pour être placé en aval du générateur électrique (5) et en amont de l'ensemble formant transformateur électrique (7) pour détecter une énergie électrique brute (W_{L}) générée par le générateur électrique (5) ; le dispositif de commande (9) étant configuré pour commander l'ensemble formant turbine à gaz (3) sur la base de l'énergie électrique brute (W_{L}) .

6. Dispositif de commande selon la revendication 4 ou 5, dans lequel le premier transducteur (52) est conçu pour être placé en un point de livraison (34) au réseau électrique (2).

7. Centrale électrique à cycle combiné, comprenant un ensemble formant turbine à gaz (3), un premier générateur électrique (5), raccordé à l'ensemble formant turbine à gaz (3), et un ensemble formant transformateur électrique (7), raccordé au premier générateur électrique (5) et à un réseau électrique (2) pour livrer de l'énergie électrique au réseau électrique (2) ; la centrale électrique à cycle combiné (1) étant **caractérisée en ce qu'**elle comprend un dispositif de commande (9), qui a un premier transducteur (52), placé en aval de l'ensemble formant transformateur électrique (7) pour détecter une énergie électrique nette (W_{N}) livrée au réseau électrique (2), et est configurée pour créer une référence d'énergie électrique nette (W_{RN}), indiquant l'énergie électrique à livrer au réseau électrique (2), et pour commander l'ensemble formant turbine à gaz (3) sur la base de la référence d'énergie électrique nette (W_{RN}) et de l'énergie électrique nette (W_{N}), dans laquelle le dispositif de commande (9) est configuré pour créer la référence d'énergie électrique brute (W_{RL}) sur la base d'une erreur d'énergie électrique nette (ERR_{WN}) calculée comme étant la différence entre la référence d'énergie électrique nette (W_{RN}) et l'énergie électrique nette (W_{N}) ; et dans laquelle le dispositif de commande (9) est configuré pour créer la référence d'énergie électrique brute (W_{FL}) sur la base de la somme de l'erreur d'énergie électrique nette (ERR_{WN}) et de l'énergie électrique brute (W_{L}) .

8. Centrale selon la revendication 7, dans laquelle le dispositif de commande (9) comprend un deuxième transducteur (51), placé en aval du générateur électrique (5) et en amont de l'ensemble formant transformateur électrique (7), pour détecter une énergie électrique brute (W_{L}) générée par le premier générateur électrique (5) ; le dispositif de commande (9) étant configuré pour commander l'ensemble formant turbine à gaz (3) sur la base de l'énergie électrique brute (W_{L}).

9. Centrale selon la revendication 7 ou 8, dans laquelle le premier transducteur (52) est placé en un point de livraison (34) au réseau électrique (2).

10. Centrale selon l'une quelconque des revendications 7 à 9, comprenant un ensemble formant turbine à vapeur (4) raccordé à l'ensemble formant turbine à gaz (3), un deuxième générateur électrique (6), raccordé à l'ensemble formant turbine à vapeur (4) pour créer une énergie électrique et à l'ensemble formant transformateur électrique (7) pour livrer l'énergie électrique au réseau électrique (2).
